# EUROPÄISCHE PATENTSCHRIFT

(11) **EP 1 762 157 B1**
(45) Veröffentlichungstag und Bekanntmachung des Hinweises auf die Patenterteilung: **22.10.2008**
(21) Anmeldenummer: 06017614.6
(22) Anmeldetag: 24.08.2006
(51) Int. Cl.: A47C 21/00, A01M 17/00

(54) **Schmiegsames Wärmegerät**
Pliable electric carpet
Flexible couverture chauffante

(30) Priorität: 08.09.2005 DE 102005042570
(43) Veröffentlichungstag der Anmeldung: 14.03.2007
(73) Patentinhaber: Beurer GmbH & Co. KG, 89077 Ulm (DE)
(72) Erfinder: Bühler, Marco, 89077 Ulm (DE); Merk, Ernst, 89264 Weissenhorn (DE); Köhler, Ralf, 89129 Langenau (DE); Wiertelorz, Harald, 89075 Ulm (DE)
(74) Vertreter: Fleck, Hermann-Josef

(56) Entgegenhaltungen:
- CH-A5- 667 196
- DE-B3- 10 317 452
- JP-A- 5 056 737
- JP-A- 10 225 359
- US-A1- 2003 145 380

## Beschreibung

Die Erfindung bezieht sich auf ein schmiegsames Wärmegerät mit einem von einer elektrischen Energieversorgung betreibbaren schmiegsamen Heizkörper, der einen schmiegsamen flächigen Trägerteil und eine in diesem eingebettete Heizelementanordnung aufweist, welche über einen elektrischen Ansteuerteil zum Erzeugen unterschiedlicher Temperaturwerte variabel mit elektrischer Energie versorgbar ist.

Ein schmiegsames Wärmegerät dieser Art ist in der DE 198 20 698 A1 angegeben. Dieses bekannte schmiegsame Wärmegerät ist als waschbares Wärmegerät in Form einer Heizdecke ausgebildet, bei dem ein flächiges Heizelement aus einzelnen dünnen Heizfäden eingebracht und eine Temperaturregelung auf höchstens 40° angegeben ist. Die Ausbildung für die Waschbarkeit soll den Anforderungen in Krankenhäusern gerecht werden, um die Decke von Bakterien und Keimen zu befreien. In dieser Druckschrift ist auch Bezug genommen auf von Warmluft zur Entkeimung und Desinfizierung durchströmte Decken, die jedoch wegen der Infektionsgefahr als nachteilig bezeichnet werden und nur für den einmaligen Gebrauch bestimmt sind. Die Wärmedecke soll durchlässig sein, damit das Waschwasser zuverlässig und vollständig in sie eindringen und alle Keime erreichen kann. Bei einer solchen Ausbildung können aber Milben und von ihnen verursachte Allergene z.B. in eine Matratze oder andere Bereiche eines Bettes gelangen.

Die JP 05 056 737 A zeigt einen elektrisch beheizbaren Teppich und eine Teppichabdeckung, die über die Teppichoberfläche gelegt werden kann, wobei eine Milbenabtötung bei abgedecktem Teppich und einer Temperatur von z. B. etwa 40 bis 45° C erfolgt.

Die JP 10 225 359 A offenbart einen wärmenden Stoff, wie z. B. eine elektrische Heizdecke, die zum schnellen Abtöten von Milben bei einer hohen Temperatur gefaltet in einen Sack eingebracht wird, der luftdicht verschlossen und aus dem die Luft dann abgesaugt wird, wonach die Aufheizung erfolgt.

Die DE 296 04 832 U1 zeigt eine gegen Mikroorganismen imprägnierte Matratze mit einem Außenbezug zum Schutz von Mikroorganismen wie Bakterien, Viren, Milben oder Pilzen und deren Ausscheidungen, um die Ausbreitung derartiger Mikroorganismen zu unterbinden. Hierzu ist eine Zwischenschicht mit einem Vlies vorgeschlagen, das Bakterien oder Viren abtötende Metallionen, beispielsweise Silberionen enthält. Auch ist angegeben, Kunstfasern mit antibakteriellen Wirkstoffen zu verwenden. Jedoch ergibt sich auch mit diesen Maßnahmen insbesondere für allergieempfindliche Benutzer kein ausreichender Milbenschutz.

In der US 2003/0145380 A1 ist eine Abdeckung bzw. ein Bezug für Matratzen oder dgl. angegeben, bei der zur Abtötung von Milben eine Wärmebehandlung mittels durchströmender anwärmbarer Luft vorgeschlagen wird. Die Lufttemperatur kann dabei im unbenutzten Zustand auf über 50° C eingestellt werden. Von der Verwendung eines elektrischen Heizelementes ist hingegen abgeraten. Eine derartige Vor richtung mit Luftdurchströmung ist relativ aufwändig und garantiert auch nicht in jedem Fall eine zuverlässige Funktion, wenn z.B. Falten erzeugt werden oder ein Luftausströmbereich abgedeckt ist. Auch besteht die Gefahr, dass sich in den Luftkanälen selbst Mikroorganismen einlagern und sich die Kanäle zusetzen.

Die CH 667 196 A5 zeigt eine Milbenschutzhülle für Liege- oder Sitzmöbel und Matratzen, wobei spezielle luftdurchlässige Filterbahnen aus Kunststoffmaterial mit einer Maschenweite von höchstens 500 µm verwendet werden, die ein Eindringen von Milben verhindern sollen. Jedoch können auch hierbei Milben z.B. unter Bedingungen einer feuchten Atmosphäre und Ansammlung eines Nährbodens (wie z.B. Hautschüppchen o.ä.) vermehrt auftreten.

Ein weiteres schmiegsames Wärmegerät ist in der DE 102 00 974 B4 als bekannt ausgewiesen. Bei diesem bekannten Wärmegerät mit einem flexiblen, schmiegsamen Heizkörper, nämlich einer Wärmedecke, einem Wärmekissen oder einem Wärmeunterbett ist in einem schmiegsamen flächigen Trägerteil eine Heizelementanordnung in Form einer Doppelkordel mit zwei koaxial zueinander angeordneten und über eine Isolationsschicht voneinander getrennten Heizleitern in geschlängelter Anordnung eingebettet, um über den Trägerteil verteilt eine flächige Erwärmung mittels über einen Ansteuerteil zugeführter elektrischer Energie zu erzeugen. Für die Regelung der Temperatur wird ein Vergleich mittels digitaler Soll- und Istwerte durchgeführt. Ferner ist eine Sicherheitseinrichtung vorhanden, mit der Fehlerzustände überwacht und in einem Fehlerfall die elektrische Stromzufuhr herabgesetzt oder abgeschaltet wird. Dabei kann auch eine zeitabhängige Sollwertabstufung bzw. Abschaltung der Heizung erfolgen. Auch ist eine Anzeigevorrichtung zur Information des Benutzers vorgesehen, wobei verschiedene Betriebszustände auf vielfältige Weise angezeigt werden können. Ähnliche Wärmegeräte und Ansteuerschaltungen sind auch in der WO 03/077597, in der in dem Heizkreis ein zusätzliches Steuerglied angeordnet ist, und in der DE 102 11 142 A1 angegeben, wobei der elektrische Ansteuerteil mit einer Sicherheitseinrichtung versehen ist, die Fehlerzustände in der Isolation zwischen dem Hin- und Rückleiter der Heizkordel auf der Basis einer Widerstandsänderung des einen negativen Temperaturkoeffizienten aufweisenden Isolationsmaterials (NTC-Widerstandsverhalten) feststellt.

Bei einem in der DE 103 24 941 A1 gezeigten weiteren schmiegsamen Wärmegerät dieser Art weist der elektrische Ansteuerteil eine Zeitsteuerschaltung auf, mit der die Solltemperatur in einer Anwärmphase erhöht wird, um sie nach einer gewissen Zeit auf einen für einen Dauerbetrieb zulässigen Wert herabzusetzen. In der DE 103 10 275 B4 ist bei einem derartigen Wärmegerät ein Ansteuerteil mit einer Überwachungseinheit für die Innentemperatur eines Schnurzwischenschalters oder der Isolation zwischen zwei Heizleitern ausgestaltet.

Auch die DE 103 17 452 83 zeigt ein schmiegsames Wärmegerät dieser Art zum Erzeugen unterschiedlicher Temperaturwerte über einen elektrischen Ansteuerteil.

Unterschiedliche Temperaturwerte können hierbei über eine Gleichrichteranordnung und ein Bedienteil gewählt werden, wobei ebenfalls eine Sicherheitseinrichtung vorgesehen ist.

In der DE 103 08 724 A1 ist ein schmiegsames Wärmegerät angegeben, bei dem die Verbindung zwischen der Heizkordel und einem elektrischen Anschlusskabel für die Energieversorgung in besonderer Weise mit einer auf dem Trägerteil angeordneten Verbindungseinheit vorgenommen ist.

Die (nicht vorveröffentlichte) deutsche Patentanmeldung Nr. 10 2004 049 920 zeigt ein schmiegsames Wärmegerät mit flächigem Heizelement und einer in besonderer Weise ausgebildeten Sicherheitseinrichtung. In besonderer Ausgestaltung kann auch hierbei ein temperaturabhängiger Isolationswiderstand mit negativem Temperaturkoeffizient genutzt werden.

Bei allen genannten Heizdecken sind die einstellbaren bzw. regelbaren Temperaturwerte auf die Eigenschaften des menschlichen Benutzers und seine Behaglichkeit abgestimmt.

Der Erfindung liegt die Aufgabe zugrunde, ein schmiegsames Wärmegerät bereitzustellen, das dem menschlichen Benutzer noch weiter Rechnung trägt.

Diese Aufgabe wird mit den Merkmalen des Anspruches 1 gelöst. Hierbei ist vorgesehen, dass der Trägerteil milbendicht mit einer flächigen milbendichten Schicht ausgeführt ist , dass der Trägerteil eine antiallergene und/oder antifungizide Ausrüstung aufweist, und dass die an zumindest einer Außenseite des Trägerteils erzeugbare höchste mittlere Temperatur auf über 55° C und höchstens 85° C und bei Sonderanwendungen sogar höher einstellbar ist. Dabei ist vorgesehen, dass eine Sicherheitseinrichtung wirksam ist, die die elektrische Energiezufuhr in einem Fehlerfall drosselt oder unterbricht, und dass die Zeitdauer der höchsten mittleren Temperatur durch automatische Herabsetzung oder Abschaltung der elektrischen Energiezufuhr begrenzt ist.

Durch die Ausbildung des Trägerteils mit der milbendichten Schicht werden Belastungen des menschlichen Benutzers, insbesondere allergisch auf von Milben verursachten Allergenen reagierenden Benutzern, bereits weitgehend ausgeschlossen, so dass diese ferngehalten werden bzw. nicht aus der Unterlage bzw. Matratze auf die Seite des Benutzers gelangen. Soweit sich Milben in dem dem Benutzer zugekehrten Bereich aufhalten, werden diese durch die relativ hohe Temperatur im Bereich des Heizkörpers ausgetrocknet und abgetötet. Auch wird durch den Aufbau des Trägerteils und die erzeugten Temperaturwerte bewirkt, dass Bestandteile der menschlichen Haut, die als Nahrung für die Milben dienen, gehindert werden, in die Unterlage einzudringen und sich dort abzulagern, und dass eine hohe Luftfeuchtigkeit vermieden wird, die das Wachstum und die Stoffwechselvorgänge der Milben begünstigen. Darüber hinaus wird auch das Milieu für andere Mikroorganismen, wie Bakterien und Pilze ungünstig, so dass auch die Lebensbedingungen für derartige Mikroorganismen zumindest weitgehend ausgeschlossen werden. Folglich wird die Bildung von Allergenen, die auf Mikroorganismen zurückzuführen sind, zumindest weitgehend vermieden. Bei der genannten mittleren örtlichen Temperatur ist auf eine möglichst gute örtliche Homogenität, d.h. möglichst geringe örtliche Schwankungen zu achten.

Dies ist insbesondere durch flächige Heizelemente zu erreichen, die jedoch erhöhten Aufwand an ein Sicherheitssystem stellen. Alternativ kann eine relativ hohe örtliche Gleichmäßigkeit der Temperatur dadurch erreicht werden, dass bei einer Verwendung einer Heizkordel als Heizelement deren geschlängelte Anordnung möglichst eng geführt ist, so dass niedrigste örtliche Temperaturwerte an der Oberfläche von unter 45° C möglichst vermieden werden. Gleichfalls sollten auch örtliche Temperaturspitzen wegen zu starker Wärmeeinwirkung auf den Benutzer vermieden werden; auch dies wird durch die Vergleichmäßigung der Temperatur mit flächigem Heizelement bzw. relativ dichter Kordelführung erreicht. Wichtig ist auch ein zuverlässig funktionierendes Sicherheitssystem mit genauer Temperaturregelung und Überwachung.

Eine vorteilhafte Ausbildung besteht darin, dass die mittlere Temperatur für mindestens 30 Minuten und vorzugsweise etwa 3 bis 4, höchstens sechs Stunden auf über 55° C oder ohne Zeitbegrenzung einstellbar ist.

Insbesondere bei einem Temperaturbereich von ca. 60° C und einer Einwirkdauer von mindestens 1 Stunde wird die Überlebensfähigkeit der im Wesentlichen aus Eiweißstoffen bestehenden Milben auf ein Minimum reduziert. Auch wird durch diese Temperatur die Luftfeuchtigkeit unter normalen Bedingungen deutlich unter den für die Milben bzw. andere Mikroorganismen optimalen Wert von 65 bis 80 % herabgesetzt, wobei auch Nachbarbereiche der Heizelementanordnung und des Trägerteils erwärmt und getrocknet werden. Mit der Sicherheitseinrichtung werden Gefährdungszustände zuverlässig vermieden.

Die örtliche Gleichmäßigkeit der Wärmeerzeugung über den Heizkörper wird dadurch begünstigt, dass die Heizelementanordnung eine geschlängelt in dem Trägerteil verlegte Heizkordel aufweist, wobei der Abstand zwischen den einander benachbart verlaufende Heizkordelabschnitten höchstens 10 cm, vorzugsweise bis ca. 6 cm beträgt, oder dass die Heizelementanordnung ein flächiges Heizelement aufweist.

Eine vorteilhafte Ausbildung zum Unterdrücken von Milben und anderen Mikroorganismen besteht darin, dass der Heizkörper als Matratzenauflage ausgebildet ist.

Dabei bestehen für den Komfort und die antiallergene Wirksamkeit vorteilhafte Ausgestaltungsvarianten darin, dass die Außenseite mit der höchsten mittleren Temperatur von der Matratzenoberseite abgewandt oder dieser zugekehrt ist, wobei zwischen der Heizelementanordnung und der Außenseite lediglich eine Decklage oder zusätzlich eine erste Polsterschicht angeordnet ist, die eine geringere Dicke oder ein geringeres Raumgewicht (Dichte) besitzt als eine ihr bezüglich der Heizelementanordnung gegenüberliegende Polsterschicht. Ähnlich kann das Wärmegerät auch als eine andere Auflage, wie z.B. für Stühle, Liegen oder dgl. ausgebildet sein.

Für die Handhabung und die Wirksamkeit ergeben sich weitere Vorteile dadurch, dass der Heizkörper sich im aufgebrachten Zustand hüllenartig über die seitlichen Bereiche der Matratze erstreckt oder mit einer zumindest teilweise umlaufenden Randeinfassung in Form seitlicher Hüllabschnitte versehen ist, an denen auf der Unterseite der Matratze verlaufende Spannmittel angebracht oder anbringbar sind.

Ferner wird der Schutz gegen Milben dadurch unterstützt, dass die Randeinfassung mittels einer milbendichten Verbindung an dem Trägerteil des Heizkörpers angebracht oder anbringbar ist.

Zum Schutz vor den Milben und zu einer einfachen Positionierung und Fixierung tragen die Maßnahmen bei, dass die seitlichen oder unteren Hüllabschnitte zum Fixieren an der Matratze oder Einschließen derselben mit einem umlaufenden Spannzug oder einem Schließmittel wie Reißverschluss oder Klettverschluss versehen sind.

Hierbei bestehen weitere günstige Maßnahmen darin, dass auch die seitlichen und gegebenenfalls unteren Hüllabschnitte milbenabweisend und/oder milbendicht ausgebildet ist.

Eine für die Bedienung vorteilhafte Ausgestaltung wird dadurch erhalten, dass der Ansteuerteil eine von einem Benutzer einstellbare Temperaturvorwahl mit mehreren vorgebbaren Temperaturstufen aufweist, wobei die höchste Temperatur einer Antiallergenstufe entspricht, bei der Milben, Bakterien oder Pilze abgetötet werden.

Eine für die Funktionsfähigkeit vorteilhafte Ausbildung besteht ferner darin, dass die milbenabweisende Substanz zumindest vermehrt durch die von der Heizelementanordnung erzeugte Wärme in ihren Wirkzustand gebracht ist.

Die Kontrolle durch einen Benutzer wird durch die Maßnahmen begünstigt, dass der Ansteuerteil mit einem Anzeigesteuerteil für eine Anzeigevorrichtung ausgerüstet ist, die eine optische, akustische oder vibratorische Kennanzeige für die Einstellung der Antiallergenstufe aufweist.

Die Steuerung zum Erreichen einer möglichst hohen Wirksamkeit wird ferner dadurch begünstigt, dass dem Ansteuerteil eine Sensoreinrichtung für die Temperatur, die Feuchte und/oder für allergenwirkende oder Allergene erzeugende Mikroorganismen in dem Trägerteil oder seinem Umgebungsbereich oder in der Matratze zugeordnet ist. Die Sensoreinrichtung kann dabei so ausgestaltet sein, dass sie während eines jeweiligen Betriebs arbeitet oder dass sie von Zeit zu Zeit in Betrieb genommen wird, um die Wärmesteuerung auf die Sensorsignale abzustimmen. Zum Nachweis von Milben oder anderer Mikroorganismen können für die Sensoreinrichtung gängige Nachweismethoden genutzt oder spezielle Sensoren zur Anwendung kommen.

Die Einbeziehung der Sensorsignale für die Steuerung wird dadurch begünstigt, dass mittels der Sensoreinrichtung erfasste Signale mittels des Ansteuerteils verarbeitbar und in die Steuerung oder Regelung der Temperatur einbeziehbar und/oder für eine Anzeige aufbereitbar sind.

Abnormale Zustände, insbesondere Fehlerzustände und Gefährdungszustände werden durch die Maßnahmen schnell erkannt, dass die Anzeigevorrichtung eine Warnanzeige aufweist und dass in dem Ansteuerteil eine diesbezügliche Schwelle vorgegeben oder vorgebbar ist, bei deren Überschreiten ein Warnsignal für den Benutzer abgebbar ist.

Die genannten Funktionen und Temperatureinstellungen des Antiallergen-Betriebs werden insbesondere in einem benutzerlosen Zustand eingestellt, so dass eine Überhitzung des Körpers vermieden wird. Die Sicherheitseinrichtung kann dazu mit Überwachungssensoren ausgerüstet sein, die die erhöhten Temperaturwerte des Antiallergen-Betriebs im benutzten Zustand ausschließt.

Des Weiteren kann die Anordnung der Heizelementanordnung und Ausgestaltung des Ansteuerteils derart ausgeführt sein, dass der Heizkörper abschnittsweise unterschiedlich stark beheizbar ist.

Eine für die Handhabung weitere vorteilhafte Ausgestaltung besteht darin, dass die Heizelementanordnung über eine auf dem Trägerteil fixierte Anschlusseinheit fest oder über ein auf dem Trägerteil oder an einem aus diesem herausragenden Kordelende angebrachtes Stecker- oder Kupplungsteil trennbar mit einem Kupplungs- oder Steckerteil einer Anschlussleitung für die elektrische Energieversorgung verbunden ist.

Weitere vorteilhafte Ausgestaltungen sind in den weiteren Unteransprüchen angegeben.

Die Erfindung wird nachfolgend anhand von Ausführungsbeispielen unter Bezugnahme auf die Zeichnungen näher erläutert. Es zeigen:
- Fig. 1: eine schematische Darstellung eines Wärmegerätes mit einem auf einer Matratze aufgebrachten schmiegsamen Heizkörper in perspektivischer Ansicht und mit verschiedenen Anschlussvarianten,
- Fig. 2: eine weitere perspektivische Ansicht eines auf einer Matratze aufgebrachten schmiegsamen Heizkörpers mit seitlichem Hüllabschnitt,
- Fig. 3: eine Querschnittsdarstellung eines auf einer Matratze aufgebrachten schmiegsamen Heizkörpers mit doppelter Polsterschicht und unterseitigem Spannzug,
- Fig. 4: eine weitere Querschnittsdarstellung eines auf einer Matratze aufgebrachten schmiegsamen Heizkörpers mit einfacher Polsterschicht auf der Oberseite und einem Spannzug auf der Unterseite und
- Fig. 5: eine weitere Querschnittsdarstellung eines auf einer Matratze aufgebrachten schmiegsamen Heizkörpers mit einfacher Polsterschicht auf der Oberseite und geschlossener Unterseite sowie seitlichem Reißverschluss.

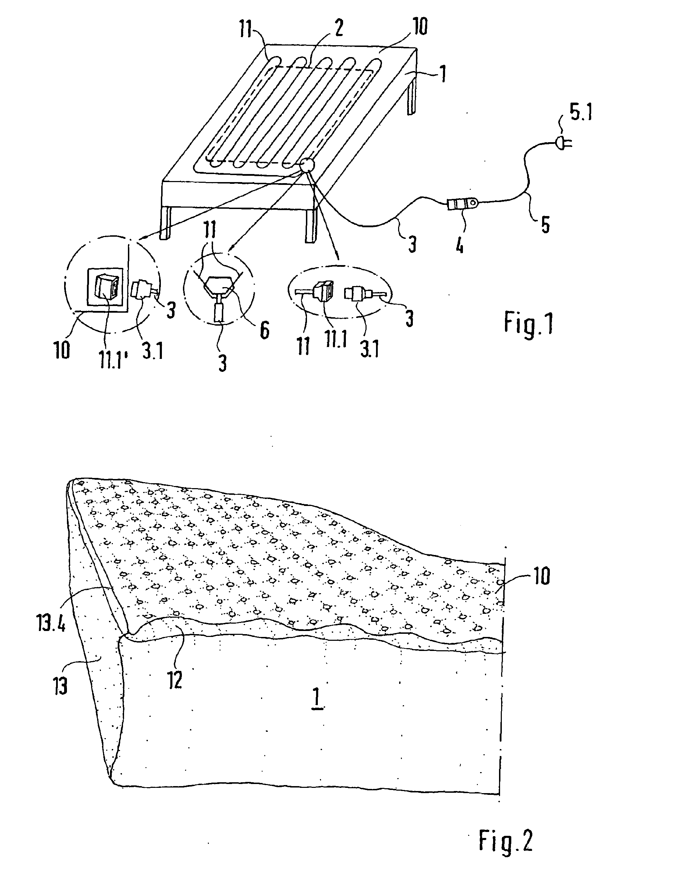

Fig. 1 zeigt in schematischer perspektivischer Darstellung einen auf einer Matratze 1 mittels einer Fixierung 2 aufgebrachten schmiegsamen Heizkörper 10, der eine in einem schmiegsamen flächigen Trägerteil geschlängelt angeordnete Heizelementanordnung 11 aufweist, die an einem oder beiden Enden fest mittels einer Anschlussplatte 6 oder trennbar mittels eines Kupplungsteils 11.1, 11.1' und mittels eines lösbaren Verbindungsteils 3.1 über eine Anschlussleitung 3 und ein Temperatur-Einstellteil 4 sowie eine Netzleitung 5 und einen Netzstecker 5.1 an eine elektrische Energieversorgung anschließbar ist, um eine gewünschte Heizleistung über die Heizelementanordnung 11 und Wärmeabgabe des Trägerteils an seiner Oberfläche zu erzeugen. Für eine waschbare Ausführung des Wärmegeräts ist die Anschlussleitung vorzugsweise lösbar.

Die Heizelementanordnung 11 ist vorliegend als Heizkordel ausgebildet, vorzugsweise mit einem in einer gemeinsamen isolierenden äußeren Umhüllung angeordnetem Hinleiter und Rückleiter, die beispielsweise koaxial zueinander angeordnet und mit einer Zwischenisolierung voneinander elektrisch isoliert sind. Alternativ kann die Heizelementanordnung 11 auch aus mindestens einem flächigen Heizelement aufgebaut sein, wie es in der eingangs genannten deutschen Patentanmeldung 10 2004 049 920 in verschiedenen Ausführungsvarianten und in Verbindung mit Sicherheitseinrichtungen aufweisenden Ansteuerteilen näher erläutert ist. Besondere Ausgestaltungsvarianten der Heizkordel sind in den übrigen eingangs genannten Druckschriften erläutert, insbesondere auch solche, bei denen die Zwischenisolation einen negativen Widerstandskoeffizienten (NTC-Ausführung) aufweist, der in besonderer Weise für die Sicherheitseinrichtung zum Erkennen einer übermäßigen Erwärmung, beispielsweise für eine punktuelle Hot-Spot-Erfassung genutzt wird. Ferner kann in weiterer Ausgestaltung der Heizdraht ein Widerstandsverhalten mit positivem Temperaturgradienten (PTC-Ausführung) aufweisen, das ebenfalls, gegebenenfalls zusätzlich zu der NTC-Zwischenisolierung für die Sicherheitseinrichtung zur Temperaturüberwachung und erforderlichenfalls Drosselung oder Abschaltung der elektrischen Stromzufuhr genutzt wird. Derartige Sicherheitseinrichtungen sind in besonderer Ausbildung für den hier eingesetzten Ansteuerteil nutzbar, das in dem Einstellteil 4 und, soweit zweckmäßig, zusätzlichen Komponenten untergebracht ist. Der Verbindungsteil zwischen Heizelement bzw. Heizkordel und Anschlussleitung 3 kann bei fester Verbindung so ausgeführt sein wie in der DE 103 08 724 A1 näher ausgeführt.

Der Heizkörper 10 mit der Heizelementanordnung 11 und dem Trägerteil sowie der Ansteuerteil sind vorliegend für einen Milbenschutz in besonderer Weise so ausgebildet, dass das Trägerteil milbendicht ausgeführt und/oder mit Milben abweisenden oder abtötenden Substanzen versehen ist. Auch sind die Materialien des Trägerteils und der Heizelementanordnung 11 so abgestimmt, dass Temperaturen im Bereich der unteren oder oberen Außenseite des Trägerteils von etwa 60° C über mehrere Stunden zuverlässig und ohne Überhitzungsgefahr erzeugt werden können. Hierfür ist auch die Ansteuerschaltung mit einer genauen Temperaturregelung und einer die Temperatur überwachenden Sicherheitseinrichtung ausgerüstet.

In vorteilhafter Ausgestaltung ist auch eine Zeitsteuerung vorgesehen, mit der die Temperatur in einer Milbenabtötungs- bzw. Antiallergen-Betriebsart, die mittels des Einstellteils 4 wählbar ist, bei einer Temperatur an der Außenseite des Trägerteils zwischen 50 und 65°, vorzugsweise um etwa 60° C, für eine Zeit zwischen ½ und 6 Stunden, vorzugsweise zwischen 1 und 3 Stunden, wählbar ist. Auch höhere Temperaturen sind insbesondere bei kleineren Flächen zulässig, wie etwa bei Heizkissen bis 85° C; in Sonderfällen sind sogar Temperaturen über 85° C anwendbar. Bei Zeitsteuerfunktion sind insgesamt Steuerzeiten bis z.B. 24 Stunden einstellbar. Bei einer weiteren vorteilhaften Ausgestaltungsvariante werden der Temperaturregelung und/oder Zeitsteuerung Signale aus weiteren Sensoren, wie etwa für Feuchte, Benutzungszustand und/oder für die Stärke eines Milbenbefalls oder anderer schädlicher Mikroorganismen wie Bakterien und Pilze, zugeführt. Um die für ein ungünstiges Lebensmilieu der Milben bzw. deren Abtötung vorteilhafte Temperatur von etwa 60° C oder höher über die gesamte Fläche des Trägerteils möglichst gleichmäßig zu erreichen, beträgt der Abstand benachbarter Abschnitte der geschlängelt angeordneten Heizkordel einige mm bis höchstens 10 cm, vorzugsweise höchstens 6 cm. Durch die wirkende Temperatur wird in dem Trägerteil und benachbarten Bereichen auch die Luftfeuchtigkeit herabgesetzt und wesentlich unter den für die Lebensbedingungen der Milben günstigen Bereich von 65 bis 80% Luftfeuchtigkeit gebracht, so dass diese austrocknen.

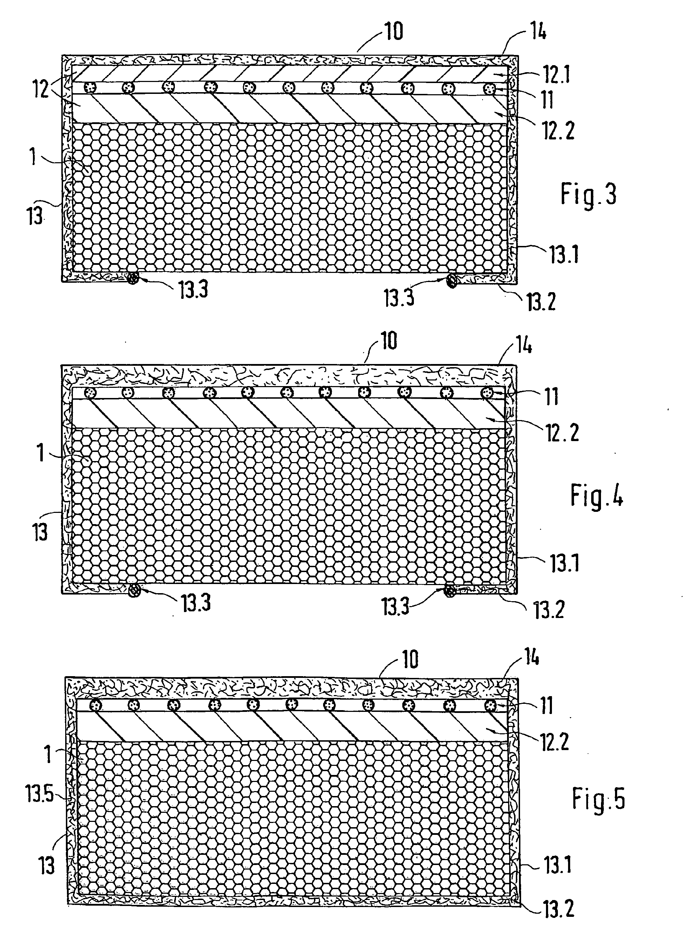

In der perspektivischen Darstellung nach Fig. 2 und den Querschnittsdarstellungen nach den Fig. 3 bis 5 sind nähere Einzelheiten zu dem auf einer Matratze 1 aufgebrachten schmiegsamen Heizkörper 10 gezeigt. Wie aus den Fig. ersichtlich, besitzt das Trägerteil des schmiegsamen Heizkörpers 10 mit daran über eine Verbindung 13.4 anschließenden seitlichen Bereichen eine hüllenartige äußere bzw. obere Decklage 14, die milbendicht ausgeführt ist, um ein Eindringen oder ein Entweichen bereits in der Matratze befindlicher Milben zu unterbinden. Unter der oberen, beispielsweise textilen (Gewebe, Gewirke, Vlies) Decklage 14 des Trägerteils ist eine Polsterschichtanordnung 12 angebracht, die beispielsweise aus nur einer unter der Heizelementanordnung 11 angeordneten unteren Polsterschicht 12.2 oder aus der unteren Polsterschicht 12.2 und einer zwischen der Decklage 14 und der Heizelementanordnung 11 befindlichen oberen Polsterschicht 12.1 besteht. Dabei kann die Heizelementanordnung 11 durch Wahl einer mehr oder weniger dicken oberen oder unteren Polsterschicht 12.1 bzw. 12.2 oder bei fehlender oberer Polsterschicht 12.1 näher an die Unterseite oder die Oberseite des Trägerteils gebracht werden, um je nach Anwendungsfall eine höhere Temperatur an der oberen oder unteren Außenseite zu erzeugen und dort befindliche Milben bzw. andere Allergene erzeugende Mikroorganismen abzutöten. Entsprechend kann eine Temperaturbeeinflussung an der Oberseite oder Unterseite durch Wahl der Materialdichte erfolgen. Fehlt die obere Polsterschicht 12.1, so kann die obere Decklage 14, wie aus den Fig. 4 und 5 im Vergleich zu Fig. 3 ersichtlich, etwas stärker ausgeführt werden, um eine Vergleichmäßigung der Wärme sowie ein evtl. Durchdrücken der Heizkordel zu vermeiden.

Wie die Fig. 2 bis 5 weiter zeigen, besteht ein umlaufender seitlicher, über die Verbindung 13.4 an das Trägerteil anschließender Hüllabschnitt 13 aus seitlichen Hüllabschnitten 13.1, die sich entlang der Seiten der Matratze 1 erstrecken und sich zumindest teilweise noch auf deren Unterseite in unteren Hüllabschnitten 13.2 fortsetzen. Ist die Unterseite von dem unteren Hüllabschnitt 13.2 nicht vollständig geschlossen, so besteht eine vorteilhafte Ausbildung darin, dass im Randbereich der unteren Hüllabschnitte 13.2 ein umlaufender Tunnel oder Schlaufen mit durchgezogenem, vorteilhaft elastischem Spannzug 13.3 versehen ist. Alternativ kann die Festlegung des Heizkörpers 10 mit dem Hüllabschnitt 13 auch mittels quer verlaufender Bänder erfolgen, die mit geeigneten Befestigungselementen, etwa Klett- oder Klipsverschlüssen, befestigt werden. Erstreckt sich der untere Hüllabschnitt 13.2 über die gesamte Unterseite der Matratze 1, wird die Matratze rundum eingehüllt. Hierbei eignet sich als öffenbarer zumindest teilweise rundum verlaufender Verschluss des Hüllabschnittes ein dichter Reißverschluss 13.5 oder ebenfalls ein Klettverschluss. Die Verbindung 13.4 zwischen dem Trägerteil und dem Hüllabschnitt 13 ist ebenfalls milbendicht beispielsweise über eine Schweißnaht und gegebenenfalls zusätzlich durch Vernähen vorgenommen.

Im Folgenden werden nähere Ausführungen zu den den Milbenschutz bzw. auch Schutz vor anderen Allergene erzeugenden Mikroorganismen wie Bakterien und Pilzen bewirkenden Ausgestaltungsmerkmalen gemacht. Obwohl auch bereits eine Heizdecke mit dem Aufbau und dem Ansteuerteil des vorstehend erläuterten schmiegsamen Heizkörpers 10 und insbesondere auch ein Wärmeunterbett einen wirksamen Milbenschutz ergeben, wird dieser insbesondere durch einen für Milben undurchlässigen Bezug mit dem schmiegsamen Heizkörper erreicht. Sind Milben abwehrende bzw. Milben tötende Substanzen in den Heizkörper 10 eingebracht, wird ein zusätzlicher Schutz erreicht, insbesondere wenn diese Substanzen bei den eingestellten Temperaturen von etwa 60° C oder darüber verstärkt wirksam oder freigesetzt werden. Dabei wird auch die Umgebung des Heizkörpers 10 mit den angrenzenden Matratzenbereichen bzw. dem Bettzeug von lebenden Milben zumindest weitgehend befreit.

Die Milbentötungsstufe bzw. Antiallergenstufe bildet die Betriebsart des schmiegsamen Heizkörpers 10 mit der höchsten Temperaturstufe und kann im Zusammenhang mit einer Bettvorwärmung oder auch Nachwärmung angewandt werden, wenn kein Benutzer auf dem Bett liegt. Die Heizdauer sollte mindestens auf 2, besser auf mindestens 3 bis 4 Stunden ausgedehnt sein, um sicherzustellen, dass die Temperatur im Bereich der Außenseite etwa 60° C bzw. mehr für eine Stunde wirksam ist und das Austrocknen und Abtöten der Hausstaubmilben bewirkt.

Verschiedene Ausführungsbeispiele für die obere Decklage 14 bestehen in einem milbendichten kalandrierten Spinnvlies und/oder antibakteriell behandelten Material, das gebleicht, gerauht, geschmirgelt oder bedruckt sein kann. Auch dichte Gewebe aus Polyester kommen in Betracht, wobei eingebettete Karbonfasern eine elektrostatische Aufladung verhindern. Mikrofasern gewährleisten eine Wasserdampf- und Luftdurchlässigkeit trotz dichter Auswebung, wodurch der Schlafkomfort und natürliche Klimaeigenschaften von Kissen, Decken und Matratzen erhalten bleiben. Auch luftdichte und atmungsaktive Membran-Laminate wirken gegen ein Austreten und Eintreten von Partikeln in die bzw. aus der Matratze wie eine Barriere. Kleine Wasserdampfmoleküle können ungehindert passieren, während Moleküle in flüssiger Form zu groß sind und zurückgehalten werden. Damit werden auch Hautschüppchen zurückgehalten, so dass eine Nahrungsquelle für die Hausstaubmilben bzw. anderen Mikroorganismen, wie Schimmelpilze, in unteren Lagen und der Matratze nicht entstehen kann. Auch Zweilagenlaminate, die eine Membran und eine reißfeste Polyester-Wirkware aufweisen, sind milben- bzw. allergendicht. Die porenlose und atmungsaktive Membran sorgt für ein angenehmes Schlafklima. Eine Reißverschluss-Unterdeckung aus dicht gewobenem Polyester-Taft ermöglicht das Entweichen der Luft, um z.B. einen Luftkisseneffekt zu vermeiden.

Auch eine Decklage mit Polyurethan- oder PVC-Beschichtung in dünner Ausführung können verwendet werden, sind jedoch für stark schwitzende Benutzer ungeeignet, da die Feuchtigkeit nicht gut abgeführt wird.

Vliesstoffe mit thermisch behandelter Oberfläche sind milbendicht, feuchtedurchlässig und als preiswerte Materialien geeignet, können aber Nachteile bezüglich Haltbarkeit besitzen.

Auch milbendichte Matratzenüberzüge aus Polypropylen Mehrschicht-Decklagen, z.B. in dreilagiger Ausführung, sind geeignet. Hierbei werden kleinste Partikel durch dicht angeordnete Polyolifinfasern zurückgehalten, wobei jedoch die Luft passieren kann und eine hohe Anschmiegsamkeit erreicht wird. Auch Acetatfasern, die antibakteriell und antiallergisch ausgestattet sein können, können als Stoff für eine Decklage verwendet werden. Freigesetzter Sauerstoff vernichtet auf natürliche Weise Bakterien, die den Nährboden für Milben und andere Mikroorganismen bilden.

Als Allergene verhindernde bzw. antiallergisch wirkende Substanzen können Naturmaterialien wie Öle oder dgl. aufgebracht oder Hohlfasern, wie z.B. Bambussubstanzen eingebracht werden. Auch Mischgewebe aus Fasern (Mischfasern) oder Garnen (Mischgarnen) können eingesetzt werden.

Als antimikrobielle Ausrüstung, die die Vermehrung von Bakterien und Pilzen hemmt, eignet sich die Einbringung von Silberfäden, die beim Zwirnen um ein zweites Trägergarn gewickelt werden. Beim Schmelzspinnen können der flüssigen Polymerschmelze Silberionen beigegeben werden. Damit entstehen synthetische Fasern, die auch Feuchtigkeit schnell abtransportieren und eine Geruchsbildung hemmen. Da die Silberionen fest in der Faser verankert sind, werden sie nicht schnell ausgewaschen.

Für die Polsterschichtanordnung eignen sich Kunststoff- oder Naturschäume in offen- oder geschlossenporiger Ausführung, wobei geeignete Stauchhärten und Raumgewichte geeignet gewählt werden können. Diese sind auch in raschelarmer Ausführung erhältlich. Ferner sind derartige Esterschäume auch als Volumenvliese,

Dämmmaterialien aus Naturstoffen, recyclingfähige Waren und auch mit antiallergischer Ausrüstung erhältlich.

Die Polsterung oder eine untere Decklage, die zusätzlich oder anstelle von dieser in dem Trägerteil integrierbar ist, kann auch als Polyestervlies ausgebildet sein, das antiallergisch und/oder milbendicht ausgebildet sein kann. Das Polyestervlies kann bedruckt, gebleicht, gerauht, geschmirgelt oder in ähnlicher Weise behandelt sein.

Der Hüllabschnitt 13 bzw. die Randeinfassung des Trägerteils dient ebenfalls dazu, die Wege der Milben von der Matratze aus oder hin zu der Matratze zu unterbrechen, wobei der schmiegsame Heizkörper 10 mit dem Trägerteil und dem anschließenden Hüllabschnitt 13 nach Art eines Spannbetttuches aus z.B. milbendichtem kalandriertem Spinnvlies ausgeführt und größtenteils oder vollständig eingehüllt wird. Die Ränder des Hüllabschnittes 13 und des Trägerteils im Bereich der Verbindung 13.4 in Form einer Naht werden so umgeschlagen, dass sie optisch unter dem Heizkörperaufbau 10 verschwinden. Ein in einem Tunnel als Spannzug 13.3 eingenähter Gummizug sorgt für die nötige elastische und dabei stabile Fixierung auf der Matratze. Alternativ erfolgt die Fixierung durch Anbinden von angenähten, angenieteten, geschweißten, oder ähnlich angebrachten Bändern. Die Nahtverbindung der Randeinfassung erfolgt mittels Nähens, Schweißens (Wärmedruckverfahren, Ultraschall, Hochfrequenz), Nietens, Klebens oder dgl. in milbendichter Ausführung, um auch in diesen Bereichen ein Eindringen oder Austreten von Milben und Allergenen zu unterbinden. Andere alternative milbendichte Materialien für den Hüllabschnitt 13 sind die oben im Zusammenhang mit der Decklage 14 genannten Materialien, wobei auch ein Gewebe verwendet werden kann, welches auf der Rückseite mit Polyurethan beschichtet ist, das elastische Eigenschaften besitzt. Die Oberfläche des Trägerteils kann durch Ultraschallschweißen oder HF-Schweißen, Steppen, Nähen oder dgl. strukturiert werden, wobei auch die Schichten des Trägerteils und auch die Heizelementanordnung 11 fixiert werden können.

Der Aufbau der Heizelementanordnung 11 besteht, wie vorstehend beschrieben, bei einem Ausführungsbeispiel aus einer flexiblen Doppelkordel, die in einer gemeinsamen Außenisolierung eingeschlossene ein- oder mehrlagige Widerstands-Heizdrähte aufweist. Für die Zwischenisolation und die Außenisolation kommen verschiedene Materialien in Betracht. Eine in die Sicherheitseinrichtung integrierte Sensoreinrichtung in Verbindung mit NTC- und/oder PTC-Eigenschaften der Zwischenisolation bzw. der Heizdrähte für Gefährdungszustände bewirkt gegebenenfalls eine Sicherheitsabschaltung. Unterschiedliche Bereiche des Heizkörpers 10 können mit getrennt ansteuerbaren Heizelementabschnitten ausgerüstet sein, so dass in gewählten Bereichen die Flächenheizleistung z.B. bewusst höher eingestellt werden kann als in anderen Bereichen, um einen erhöhten Wärmekomfort nach Wunsch des Benutzers zu ermöglichen.

Bei der Ausführung mit einem flexiblen Flächenheizelement bestehen verschiedene Ausgestaltungsvarianten darin, dass dieses auf leitenden Folien, Lacken, Geweben, Drähten, Kunststoffen, Halbleitern und/oder sonstigen Materialien basiert, wobei die Zwischenisolation und Außenisolation ebenfalls mit verschiedenen Materialien ausgeführt sein kann und auch eine Sensoreinrichtung vorgesehen sein kann, die auf dem PTC- und/oder NTC-Verhalten basiert, wobei auch eine Sicherheitsabschaltung beispielsweise bei Hot-Spots ausgelöst werden kann.

Der Ansteuerteil mit dem Einstellteil bietet einerseits eine geeignete Temperaturwahl für den benutzten Zustand und andererseits für die Milbentötungsstufe bzw. Antiallergenstufe. Aufgrund der Sicherheitseinrichtung erfolgt eine Herabsetzung der Heizleistung im Fehlerfall oder eine reversible oder irreversible Abschaltung der Heizung, beispielsweise auch bei lokaler Überhitzung. Verschiedene Einstellmöglichkeiten mit der Einstelleinheit, insbesondere einem mehrstufigen Schnurzwischenschalter, bestehen in einer Stufe 1 für einen Übernachtbetrieb, Stufen 2 bis 5 für eine Bettvorheizung mit mehreren Stufen und Stufe 6 mit einer Milbentötungsstufe bzw. Antiallergenstufe, die auch als besondere Stufe einer Bettvorheizung und oder eine Nachheizung nach Verlassen des Bettes ausgestaltet sein kann, sowie einer Stufe 0 für den ausgeschalteten Zustand. Auch kann eine Einstellmöglichkeit für verschiedene Zeiteinstellungen mit Zeitsteuerschaltung beispielsweise mit einem weiteren ein- oder mehrstufigen Schalter in der Einstelleinheit vorgesehen sein.

Um den Benutzer gut wahrnehmbar und eindeutig zu informieren, ist bei einer vorteilhaften Ausgestaltung eine optische und/oder akustische und/oder vibratorische Anzeige vorhanden, die insbesondere auch die Milbentötungsstufe anzeigt. Dabei bestehen verschiedene Ausgestaltungsvarianten darin, dass beim Einstellen bzw. bis zum Erreichen der 60° C Oberflächentemperatur eine Anzeige stetig leuchtet, danach durch ein blitzartiges Blinken die Milbentötungsstufe signalisiert wird und z.B. anschließend die Abschaltung durch die Zeitsteuerung (Ausschaltung der Heizung) mit langsamem Blinken angezeigt wird. Auch eine Gerätebetriebsanzeige kann vorgesehen sein.

Bei einer anderen Ausgestaltung ist die Milbentötungsstufe in die Programmautomatik der Regel- und Steuereinrichtung einbezogen. Dabei ist die Milbentötungsstufe beispielsweise in die Anheizphase integriert, die auf diese Funktion abgestimmt ist, und nach entsprechend ausgedehntem Zeitablauf oder Erreichen einer Grenz-Temperatur erfolgt eine Absenkung des Sollwertes entsprechend der gewünschten Temperatureinstellung des Bedieners für den Benutzungs- bzw. Übernachtbetrieb. Des Weiteren kann die Regel- und Steuereinrichtung mit einer Sensoreinrichtung für die Bettfeuchte, mit einer Biosensorik, etwa für den Zustand des Milbenbefalls oder für eine Belastung mit Allergenen oder mit anderen Mikroorganismen, oder mit einem Anwesenheitssensor für einen Benutzer oder mit einer Kombination aus verschiedenen Sensoren vorgesehen sein. Mittels der Programmautomatik kann der Heizablauf unter Einbeziehung der Milbentötungsstufe gesteuert werden, wobei diese hinsichtlich der Temperaturwerte und/oder der Zeitdauer auch in Abhängigkeit von den zusätzlichen Sensorsignalen variabel steuerbar ausgeführt sein kann. Auch die Ansteuerung der Anzeige kann in Abhängigkeit von den durch die Programmautomatik gesteuerten Einstellungen und/oder Sensorsignalen entsprechend automatisch durchgeführt werden, um den Benutzer über den augenblicklichen Betriebszustand zu informieren.

Bei einer derartigen Ausgestaltung weist die Sensoreinrichtung z.B. eine stetige Überwachung der Menge an Bakterien, Pilzen oder Milben bzw. Allergenen auf. Eine Ausführungsform besteht dabei darin, dass ein Grenzwert vorgegeben wird und ein Überschreiten desselben überwacht wird. Dies kann z.B. mit einer reaktiven chemischen Flüssigkeit oder anderen Nachweismethode erfolgen. Eine Ausgestaltung besteht dabei darin, dass die Programmautomatik umprogrammierbar und an neue Erkenntnisse anpassbar ist, wobei auch verbesserte Sensoren zum Einsatz kommen können.

Bei einer anderen Ausgestaltung ist vorgesehen, dass mittels der Eingabeeinheit bzw. dem Schnurzwischenschalter lediglich verschiedene Temperaturstufen bzw. die Abschaltung einstellbar ist und/oder übliche Verwendungsstufen, während die Milbentötungsstufe in die Programmautomatik integriert ist.

In die Anzeigeeinrichtung kann auch eine Anzeige der Allergene erzeugenden Belastung mit Mikroorganismen, insbesondere Milben, einbezogen sein, so dass der Benutzer die Milbentötungsstufe nach Bedarf wählen kann. Verschiedene günstige Anzeigemittel bestehen in einer LCD-Anzeige, LED-Anzeige mit oder ohne Balkenanzeige oder Trendanzeige, einer Laserdiode zur Projektion oder einer organischen LED (OLED), die beispielsweise in einem gut sichtbaren Flächenbereich des Heizkörpers angeordnet werden kann.

Eine weitere Ausgestaltungsvariante besteht darin, dass die Ergebnisse in einer an dem Ansteuerteil vorgesehenen Speichereinrichtung vorzugsweise mit zeitlichen Rasterwerten und Abrufmöglichkeiten abgelegt werden. Auch eine Schnittstelle zu anderen Kommunikationsgeräten, z.B. externen Personalcomputern oder telemetrische Überwachungsstation, ist von Vorteil.

## Patentansprüche

1. Schmiegsames Wärmegerät mit einem von einer elektrischen Energieversorgung betreibbaren schmiegsamen Heizkörper (10), der einen schmiegsamen flächigen Trägerteil und eine in diesem eingebettete Heizelementanordnung (11) aufweist, welche über einen elektrischen Ansteuerteil zum Erzeugen unterschiedlicher Temperaturwerte variabel mit elektrischer Energie versorgbar ist,
**dadurch gekennzeichnet,**
**dass** der Trägerteil milbendicht mit einer flächigen milbendichten Schicht ausgeführt ist,
**dass** der Trägerteil eine antiallergene und/oder antifungizide Ausrüstung aufweist,
**dass** die an zumindest einer Außenseite des Trägerteils erzeugbare höchste mittlere Temperatur auf über 55° C einstellbar ist, wobei eine Sicherheitseinrichtung wirksam ist, die die elektrische Energiezufuhr in einem Fehlerfall drosselt oder unterbricht, und
**dass** die Zeitdauer der höchsten mittleren Temperatur durch automatische Herabsetzung oder Abschaltung der elektrischen Energiezufuhr begrenzt ist.

2. Wärmegerät nach Anspruch 1,
**dadurch gekennzeichnet,**
**dass** die höchste mittlere Temperatur für mindestens 30 Minuten und höchstens 6 Stunden oder ohne Zeitbegrenzung einstellbar ist.

3. Wärmegerät nach Anspruch 1 oder 2,
**dadurch gekennzeichnet,**
**dass** die Heizelementanordnung (11) eine geschlängelt in dem Trägerteil verlegte Heizkordel aufweist, wobei der Abstand zwischen den einander benachbart verlaufenden Heizkordelabschnitten höchstens 10 cm beträgt, oder
**dass** die Heizelementanordnung (11) ein flächiges Heizelement aufweist.

4. Wärmegerät nach einem der vorhergehenden Ansprüche,
**dadurch gekennzeichnet,**
**dass** der Heizkörper (10) als Matratzenauflage ausgebildet ist.

5. Wärmegerät nach Anspruch 4,
**dadurch gekennzeichnet,**
**dass** die Außenseite mit der höchsten mittleren Temperatur von der Matratzenoberseite abgewandt oder dieser zugekehrt ist, wobei zwischen der Heizelementanordnung (11) und der Außenseite lediglich eine Decklage (14) oder zusätzlich eine erste Polsterschicht (12.1) angeordnet ist, die eine geringere Dicke oder ein geringeres Raumgewicht besitzt als eine ihr bezüglich der Heizelementanordnung (11) gegenüberliegende Polsterschicht (12.2).

6. Wärmegerät nach Anspruch 4 oder 5,
**dadurch gekennzeichnet,**
**dass** der Heizkörper (10) sich im aufgebrachten Zustand hüllenartig über die seitlichen Bereiche der Matratze (1) erstreckt oder mit einer zumindest teilweise umlaufenden Randeinfassung in Form seitlicher Hüllabschnitte (13.1) versehen ist, an denen auf der Unterseite der Matratze verlaufende Spannmittel angebracht oder anbringbar sind.

7. Wärmegerät nach Anspruch 6,
**dadurch gekennzeichnet,**
**dass** die Randeinfassung mittels einer milbendichten Verbindung (13.4) an dem Trägerteil des Heizkörpers (10) angebracht oder anbringbar ist.

8. Wärmegerät nach Anspruch 6 oder 7,
**dadurch gekennzeichnet,**
**dass** sich an die seitlichen Hüllabschnitte (13.1) zumindest abschnittsweise unter die Unterseite der Matratze reichende untere Hüllabschnitte (13.2) anschließen.

9. Wärmegerät nach einem der Ansprüche 6 bis 8,
**dadurch gekennzeichnet,**
**dass** die seitlichen oder unteren Hüllabschnitte (13.1; 13.2) zum Fixieren an der Matratze oder Einschließen derselben mit einem umlaufenden Spannzug (13.1) oder einem Schließmittel wie Reißverschluss oder Klettverschluss versehen sind.

10. Wärmegerät nach einem der Ansprüche 6 bis 9,
**dadurch gekennzeichnet,**
**dass** auch die seitlichen und gegebenenfalls unteren Hüllabschnitte (13.1, 13.2) milbenabweisend und/oder milbendicht ausgebildet ist.

11. Wärmegerät nach einem der vorhergehenden Ansprüche,
**dadurch gekennzeichnet,**
**dass** der Ansteuerteil eine von einem Benutzer einstellbare Temperaturvorwahl mit mehreren vorgebbaren Temperaturstufen aufweist, wobei die höchste Temperatur einer Antiallergenstufe entspricht, bei der Milben, Bakterien oder Pilze abgetötet werden.

12. Wärmegerät nach einem der vorhergehenden Ansprüche,
**dadurch gekennzeichnet,**
**dass** die milbenabweisende Substanz zumindest vermehrt durch die von der Heizelementeanordnung (11) erzeugte Wärme in ihren Wirkzustand gebracht ist.

13. Wärmegerät nach einem der vorhergehenden Ansprüche,
**dadurch gekennzeichnet,**
**dass** der Ansteuerteil mit einem Anzeigesteuerteil für eine Anzeigevorrichtung ausgerüstet ist, die eine optische, akustische oder vibratorische Kennanzeige für die Einstellung der Antiallergenstufe aufweist.

14. Wärmegerät nach einem der vorhergehenden Ansprüche,
**dadurch gekennzeichnet,**
**dass** dem Ansteuerteil eine Sensoreinrichtung für die Temperatur, die Feuchte und/oder für allergenwirkende oder Allergene erzeugende Mikroorganismen in dem Trägerteil oder seinem Umgebungsbereich oder in der Matratze zugeordnet ist.

15. Wärmegerät nach Anspruch 14,
**dadurch gekennzeichnet,**
**dass** mittels der Sensoreinrichtung erfasste Signale mittels des Ansteuerteils verarbeitbar und in die Steuerung oder Regelung der Temperatur einbeziehbar und/oder für eine Anzeige aufbereitbar sind.

16. Wärmegerät nach einem der Ansprüche 13 bis 15,
**dadurch gekennzeichnet,**
**dass** die Anzeigevorrichtung eine Wamanzeige aufweist und
**dass** in dem Ansteuerteil eine Schwelle vorgegeben oder vorgebbar ist, bei deren Überschreiten ein Warnsignal für den Benutzer abgebbar ist.

17. Wärmegerät nach einem der vorhergehenden Ansprüche,
**dadurch gekennzeichnet,**
**dass** die Heizelementanordnung (11) über eine auf dem Trägerteil fixierte Anschlusseinheit (6) fest oder über ein auf dem Trägerteil oder an einem aus diesem herausragenden Kordelende angebrachtes Stecker- oder Kupplungsteil trennbar mit einem Kupplungs- oder Steckerteil einer Anschlussleitung für die elektrische Energieversorgung verbunden ist.

18. Wärmegerät nach einem der vorhergehenden Ansprüche,
**dadurch gekennzeichnet,**
**dass** der schmiegsame Heizkörper (10) waschbar ist.

19. Wärmegerät nach einem der Ansprüche 14 bis 18,
**dadurch gekennzeichnet,**
**dass** die Signale der Sensoreinrichtung in einer vorgesehenen Speichereinrichtung der Steuerung ablegbar sind.

20. Wärmegerät nach einem der vorhergehenden Ansprüche,
**dadurch gekennzeichnet,**
**dass** eine Schnittstelle zu peripheren Geräten für eine unidirektionale oder bidirektionale Datenübertragung vorgesehen ist.

## Claims

1. Flexible heating appliance with a flexible heating body (10) which can be operated from an electrical energy supply and which has a flexible sheet-like carrier part and a heating-element arrangement (11) which is embedded in the latter and which can be supplied variably with electrical energy via an electrical activation part in order to generate different temperature values, **characterized in that** the carrier part is designed, mite-proof, with a sheet-like mite-proof layer, **in that** the carrier part has an anti-allergenic and/or anti-fungicidal finish, **in that** the highest average temperature capable of being generated in at least an outside of the carrier part can be set at above 55°C, a safety device being effective which throttles or interrupts the electrical energy feed in the event of a fault, and **in that** the duration of the highest average temperature is limited by electrical energy feed being lowered or switched off automatically.

2. Heating appliance according to Claim 1, **characterized in that** the highest average temperature can be set for at least 30 minutes and at most 6 hours or without time limitation.

3. Heating appliance according to Claim 1 or 2, **characterized in that** the heating-element arrangement (11) has a heating cord laid in a serpentine manner in the carrier part, the distance between the heating-cord portions which run adjacently to one another being at most 10 cm, or **in that** the heating-element arrangement (11) has a sheet-like heating element.

4. Heating appliance according to one of the preceding claims, **characterized in that** the heating body (10) is designed as a mattress cover.

5. Heating appliance according to Claim 4, **characterized in that** the outside having the highest average temperature faces away from the mattress top side or faces this, there being arranged between the heating-element arrangement (11) and the outside merely a covering sheet (14) or, additionally, a first upholstery layer (12.1) which possesses a lower thickness or a lower weight per unit volume than an upholstery layer (12.2) lying opposite it with respect to the heating-element arrangement (11).

6. Heating appliance according to Claim 4 or 5, **characterized in that**, in the applied state, the heating body (10) extends in an enveloping manner over the lateral regions of the mattress (1) or is provided with an at least partially peripheral edge border in the form of lateral enveloping portions (13.1), to which tension means running on the underside of the mattress are attached or attachable.

7. Heating appliance according to Claim 6, **characterized in that** the edge border is attached or attachable to the carrier part of the heating body (10) by means of a mite-proof connection (13.4).

8. Heating appliance according to Claim 6 or 7, **characterized in that** the lateral enveloping portions (13.1) have adjoining them, at least in portions, lower enveloping portions (13.2) extending under the underside of the mattress.

9. Heating appliance according to one of Claims 6 to 8, **characterized in that** the lateral or lower enveloping portions (13.1; 13.2) are provided, for fixing to the mattress or for enclosing the latter, with a peripheral tensioning pull (13.1) or with a closing means, such as a zip fastening or touch-and-close fastening.

10. Heating appliance according to one of Claims 6 to 9, **characterized in that** the lateral, and, if appropriate, lateral or lower enveloping portions (13.1; 13.2) are also of mite-repelling and/or mite-proof design.

11. Heating appliance according to one of the preceding claims, **characterized in that** the activation part has a temperature preselection capable of being set by a user and having a plurality of predeterminable temperature stages, the highest temperature corresponding to an anti-allergenic stage at which mites, bacteria or fungi are killed.

12. Heating appliance according to one of the preceding claims, **characterized in that** the mite-repelling substance is put into its effective state, at least to an increased extent, by the heat generated by the heating-element arrangement (11).

13. Heating appliance according to one of the preceding claims, **characterized in that** the activation part is equipped with an indication control part for an indicator device which has an optical, acoustic or vibratory identifying indication for setting the anti-allergenic stage.

14. Heating appliance according to one of the preceding claims, **characterized in that** the activation part is assigned a sensor device for the temperature and the moisture and/or for allergenic or allergen-generating microorganisms in the carrier part or its surrounding region or in the mattress.

15. Heating appliance according to Claim 14, **characterized in that** signals detected by means of the sensor device can be processed by means of the activation part and can be incorporated into the control or regulation of the temperature and/or can be edited for an indication.

16. Heating appliance according to one of Claims 13 to 15, **characterized in that** the indicator device has a warning indication, and **in that** a threshold, upon the overshooting of which a warning signal can be emitted for the user, is predetermined or predeterminable in the activation part.

17. Heating appliance according to one of the preceding claims, **characterized in that** the heating-element arrangement (11) is connected to a coupling part or plug part of a connecting line for the electrical energy supply either permanently via a connection unit (6) fixed to the carrier part or separably via a plug part or coupling part attached to the carrier part or to a cord end projecting from the latter.

18. Heating appliance according to one of the preceding claims, **characterized in that** the flexible heating body (10) is washable.

19. Heating appliance according to one of Claims 14 to 18, **characterized in that** the signals from the sensor device can be stored in a storage device provided in the control.

20. Heating appliance according to one of the preceding claims, **characterized in that** an interface with peripherals for one-way or two-way data transmission is provided.

## Revendications

1. Appareil chauffant flexible comprenant un corps chauffant (10) flexible pouvant être alimenté par une alimentation en énergie électrique, qui présente une partie de support plane flexible et un agencement d'éléments chauffants (11) incorporé dans celle-ci, lequel peut être alimenté en énergie électrique de manière variable par le biais d'une partie de commande électrique afin de produire des valeurs de température différentes,
**caractérisé en ce que**
la partie de support est réalisée sous forme de barrière aux acariens, avec une couche plane formant barrière aux acariens,
la partie de support présente un traitement antiallergène et/ou antifongique,
la température moyenne maximale pouvant être produite sur au moins un côté extérieur de la partie de support peut être ajustée à plus de 55°C, un dispositif de sécurité servant à limiter ou à couper l'alimentation en énergie électrique en cas de mauvais fonctionnement, et
la durée d'application de la température moyenne maximale est limitée par une réduction ou une coupure automatique de l'alimentation en énergie électrique.

2. Appareil chauffant selon la revendication 1,
**caractérisé en ce que**
la température moyenne maximale peut être ajustée pendant au moins 30 minutes et au plus 6 heures, ou bien sans limite de temps.

3. Appareil chauffant selon la revendication 1 ou 2,
**caractérisé en ce que**
l'agencement d'éléments chauffants (11) présente un cordon chauffant posé en méandres dans la partie de support, la distance entre les sections de cordon chauffant s'étendant les unes à côté des autres valant au plus 10 cm, ou **en ce que** l'agencement d'éléments chauffants (11) présente un élément chauffant plat.

4. Appareil chauffant selon l'une quelconque des revendications précédentes,
**caractérisé en ce que**
le corps chauffant (10) est réalisé sous la forme d'un dessus de matelas.

5. Appareil chauffant selon la revendication 4,
**caractérisé en ce que**
le côté extérieur avec la température moyenne maximale est opposé au côté supérieur du matelas ou est tourné vers celui-ci, seulement une couche de recouvrement (14) ou en plus une première couche de rembourrage (12.1) étant disposée entre l'agencement d'éléments chauffants (11) et le côté extérieur, la première couche de rembourrage ayant une plus faible épaisseur ou un plus faible poids volumique qu'une couche de rembourrage (12.2) opposée à celle-ci par rapport à l'agencement d'éléments chauffants (11).

6. Appareil chauffant selon la revendication 4 ou 5,
**caractérisé en ce que**
le corps chauffant (10) s'étend, dans l'état appliqué, en forme de housse sur les régions latérales du matelas (1), ou est pourvu d'un bordage latéral au moins partiellement périphérique en forme de sections de housse latérales (13.1), sur lesquelles des moyens de serrage s'étendant sur le côté inférieur du matelas sont ou peuvent être montés.

7. Appareil chauffant selon la revendication 6,
**caractérisé en ce que**
le bordage latéral est appliqué ou peut être appliqué au moyen d'un assemblage formant barrière aux acariens (13.4) sur la partie de support du corps chauffant (10).

8. Appareil chauffant selon la revendication 6 ou 7,
**caractérisé en ce que**
des sections de housse inférieures (13.2) s'étendant au moins en partie sous le côté inférieur du matelas se raccordent aux sections de housse latérales (13.1).

9. Appareil chauffant selon l'une quelconque des revendications 6 à 8,
**caractérisé en ce que**
les sections de housse inférieures ou latérales (13.1 ; 13.2) sont prévues pour être fixées au matelas ou pour l'entourer, avec un cordon de serrage (13.3) périphérique ou avec un moyen de fermeture comme une fermeture à glissière ou une fermeture de type velcro.

10. Appareil chauffant selon l'une quelconque des revendications 6 à 9,
**caractérisé en ce que**
les sections de housse latérales et éventuellement inférieures (13.1, 13.2) sont également réalisées de manière à former une barrière aux acariens et/ou à repousser les acariens.

11. Appareil chauffant selon l'une quelconque des revendications précédentes,
**caractérisé en ce que**
la partie de commande présente une présélection de température pouvant être ajustée par un utilisateur, avec plusieurs niveaux de température prédéfinissables, la température maximale correspondant à un niveau antiallergène auquel les acariens, les bactériens ou les champignons sont tués.

12. Appareil chauffant selon l'une quelconque des revendications précédentes,
**caractérisé en ce que**
la substance repoussant les acariens est amenée à sa fonction active au moins de manière accrue par la chaleur produite par l'agencement d'éléments chauffants (11).

13. Appareil chauffant selon l'une quelconque des revendications précédentes,
**caractérisé en ce que**
la partie de commande est munie d'une partie de commande d'affichage pour un dispositif d'affichage qui présente un indicateur caractéristique optique, acoustique ou vibratoire pour ajuster les niveaux antiallergènes.

14. Appareil chauffant selon l'une quelconque des revendications précédentes,
**caractérisé en ce que**
l'on associe à la partie de commande un dispositif de capteur pour la température, l'humidité et/ou pour des microorganismes produisant des allergènes ou à effets allergènes, dans la partie de support ou sa région avoisinante ou dans le matelas.

15. Appareil chauffant selon la revendication 14,
**caractérisé en ce que**
les signaux détectés au moyen du dispositif de capteurs peuvent être traités au moyen de la partie de commande et peuvent être incorporés dans la commande ou le réglage de la température et/ou peuvent être traités en vue d'un affichage.

16. Appareil chauffant selon l'une quelconque des revendications 13 à 15,
**caractérisé en ce que**
le dispositif d'affichage présente un indicateur d'avertissement et
**en ce qu'**un seuil est ou peut être prédéfini dans la partie de commande, au-delà duquel un signal d'avertissement peut être émis pour avertir l'utilisateur.

17. Appareil chauffant selon l'une quelconque des revendications précédentes,
**caractérisé en ce que**
l'agencement d'éléments chauffants (11) est connecté fixement par le biais d'une unité de raccordement (6) fixée sur la partie de support ou de manière séparable par le biais d'une partie d'enfichage ou d'accouplement montée sur une partie de support ou sur une extrémité du cordon qui dépasse de celle-ci, à une partie d'accouplement ou d'enfichage d'une conduite de raccordement pour l'alimentation en énergie électrique.

18. Appareil chauffant selon l'une quelconque des revendications précédentes,
**caractérisé en ce que**
le corps chauffant flexible (10) est lavable.

19. Appareil chauffant selon l'une quelconque des revendications 14 à 18,
**caractérisé en ce que**
les signaux du dispositif de capteurs peuvent être saisis dans un système de mémoire prévu dans la commande.

20. Appareil chauffant selon l'une quelconque des revendications précédentes,
**caractérisé en ce que**
l'on prévoit une interface avec des appareils périphériques pour permettre un transfert de données unidirectionnel ou bidirectionnel.
